(19) Europäisches Patentamt
European Patent Office
Office européen des brevets

(11) **EP 1 524 512 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(51) Int Cl.:
*G01M 11/06* (2006.01)    *G01J 1/06* (2006.01)

(21) Anmeldenummer: **04023865.1**

(22) Anmeldetag: **07.10.2004**

(54) **Leuchtenprüfeinrichtung für Fahrzeuge, vorzugsweise für Kraftfahrzeuge**

Testing device for vehicle lights, in particular for motor vehicles

Dispositif de test de feux pour véhicules, en particulier pour véhicules automobiles

(84) Benannte Vertragsstaaten:
**AT BE BG CH CY CZ DE DK EE ES FI FR GB GR HU IE IT LI LU MC NL PL PT RO SE SI SK TR**

(30) Priorität: **13.10.2003 DE 10348231**

(43) Veröffentlichungstag der Anmeldung:
**20.04.2005 Patentblatt 2005/16**

(73) Patentinhaber: **Scala Design GmbH**
**71034 Böblingen (DE)**

(72) Erfinder:
• **Theiss, Peter**
**70193 Stuttgart (DE)**

• **Wehlan, Herbert Prof.Dr.**
**71229 Leonberg (DE)**

(74) Vertreter: **Jackisch-Kohl, Anna-Katharina**
**Patentanwälte**
**Jackisch-Kohl & Kohl**
**Stuttgarter Strasse 115**
**70469 Stuttgart (DE)**

(56) Entgegenhaltungen:
**US-A- 4 498 767        US-A- 5 392 111**

• **DATABASE WPI Section EI, Week 198348 Derwent Publications Ltd., London, GB; Class S02, AN 1983-832280 XP002315699 -& SU 996 897 A (LAKOMKIN M V) 15. Februar 1983 (1983-02-15)**

**Beschreibung**

Die Erfindung betrifft eine Leuchtenprüfeinheit für Fahrzeuge, vorzugsweise für Kraftfahrzeuge, nach dem Oberbegriff des Anspruches 1.

Es sind Leuchtenprüfeinrichtungen bekannt, mit denen das von einer Rückleuchte abgestrahlte Licht erfasst und im Hinblick auf seine Lichtstärke überprüft wird. Solche Leuchteneinrichtungen haben einen Messkopf mit einer Sammellinse und einer Fotozelle. Der Messkopf arbeitet somit im Wesentlichen wie ein Belichtungsmesser, der die von der zu prüfenden Leuchte ausgesandten Strahlen erfasst. Mit dem Messkopf kann festgestellt werden, ob die Lichtstärke der zu messenden Leuchte den gesetzlichen Anforderungen entspricht. Mit dieser Leuchtenprüfeinrichtung können Rückleuchten grob gemessen werden. Problematisch ist der Einfluss von Umgebungslicht, der den Messvorgang beeinträchtigen kann.

Es ist eine Leuchtenprüfeinrichtung für Kraftfahrzeuge bekannt (US-A-5 392 111), die einen Messkopf aufweist, mit dem die von der zu prüfenden Leuchte ausgesandten Strahlen erfasst werden. Der Messkopf hat eine Strahlenselektionseinheit, die für die Strahlen gleich große, längliche röhrenförmige Durchtrittsöffnungen aufweist, hinter denen sich eine CCD-Kamera befindet, die an einen Computer angeschlossen ist. Der Messkopf weist am Austrittsende der Strahlen eine Mattscheibe auf und ist an einem Gestell gehalten, das am Boden steht.

Es ist auch eine Einrichtung zur Prüfung der Kollimation und des lotrechten Einfalls des Lichtes einer Leuchte bekannt (US-A-4 498 767), bei der die Prüfeinrichtung einen Messkopf aufweist, der die von der zu prüfenden Leuchte ausgesandten Strahlen erfasst. Die Prüfeinrichtung hat eine Strahlenselektionseinheit, die für die Strahlen Durchtrittsöffnungen aufweist, hinter denen sich Strahlenerfassungseinheiten befinden. Die Strahlenselektionseinheit besteht aus gleich ausgebildeten Lochplatten, deren Durchtrittsöffnungen gleich groß sind. Das Verhältnis von Durchmesser der Durchtrittsöffnungen zur Dicke der Strahlenselektionseinheit liegt bei etwa 1:40.

Schließlich ist eine Leuchtenprüfeinrichtung für Kraftfahrzeuge bekannt (DATABASE WPI Section EI, Week 198348 Derwent Publications Ltd., London, GB; Class S02, AN 1983-832280 XP002315699-& SU 996 897A (LA-KOMKIN MV) 15. Februar 1983 (1983-02-15)), die ein Gestell mit einem Messkopf aufweist, der gleich große, längliche Röhren aufweist. Sie sind jeweils mit Eingangsblende und Detektor versehen.

Der Erfindung liegt die Aufgabe zugrunde, die gattungsgemäße Leuchtenprüfeinrichtung so auszubilden, daß bei einfacher konstruktiver Gestaltung der Meßvorgang genau und zuverlässig durchgeführt werden kann.

Diese Aufgabe wird bei der gattungsgemäßen Leuchtenprüfeinrichtung erfindungsgemäß mit den Merkmalen des Anspruches 1 gelöst.

Der Meßkopf ist mit der Strahlenselektionseinheit versehen, in die die von der zu messenden Leuchte ausgesandten Strahlen gelangen. Sie treten in die Durchtrittsöffnungen ein und werden beim Austritt aus der Strahlenselektionseinheit von der Strahlenerfassungseinheit erfaßt. Sie liefert entsprechend dem erfaßten Abbild Signale, die einer weiteren Verarbeitung zugeführt werden. Mit der erfindungsgemäßen Leuchtenprüfeinrichtung ist eine genaue Messung der Leuchte möglich. Es kann die örtliche Verteilung der Leuchtdichte der Leuchte in einer bestimmten Richtung, z. B. HO-VO-Richtung, zuverlässig erkannt werden. Beim Meßvorgang ist eine genaue Positionierung der Leuchtenprüfeinrichtung in vertikaler, horizontaler und/oder longitudinaler Richtung in bezug auf die Leuchte nicht notwendig. Es reicht für diese Richtungen eine relativ grobe Positionierung für eine zuverlässige Messung aus. Die Leuchtenprüfeinrichtung kann auch zur Messung von dynamischen Leuchten, zur Messung von Rückstrahlern und sogar zur Messung von Scheinwerfern eingesetzt werden. Die Strahlenselektionseinheit sorgt dafür, daß nur das von der zu prüfenden Leuchte ausgesandte Licht aus der Strahlenselektionseinheit austritt und von der Strahlenerfassungseinheit erfaßt wird. Mit der Strahlenselektionseinheit lassen sich Lichtstärken in bestimmten Richtungen messen. Um den Anteil an Umgebungslicht, z.B. bei Reflexionen auf der Leuchtenoberfläche in der gemessenen Richtung, zumindest weitgehend auszuschalten, wird dieser Anteil vorteilhaft per Software eliminiert. So kann die rechnerische Integration der Bildhelligkeit auf denjenigen Bildausschnitt beschränkt werden, der zur gemessenen Leuchte gehört. Eine weitere Möglichkeit besteht darin, ein Bild bei ausgeschalteter Leuchte aufzunehmen (Dunkelmessung) und vom Meßbild zu subtrahieren.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen

Fig. 1                in perspektivischer und vereinfachter Darstellung eine erste Ausführungsform einer erfindungsgemäßen Leuchtenprüfeinrichtung,

Fig. 2 bis Fig. 4     in Darstellungen entsprechend Fig. 1 weitere Ausführungsformen von erfindungsgemäßen Leuchtenprüfeinrichtungen,

Fig. 5                in schematischer Darstellung das Meßprinzip unter Verwendung der erfindungsgemäßen Leuchtenprüfeinrichtung,

Fig. 6 in schematischer Darstellung den Strahlenverlauf innerhalb der Strahlenselektionseinheit in Lochblechausführung,

Fig. 7 in schematischer Darstellung einen Schnitt durch die Strahlenselektionseinheit in Lochblechausführung,

Fig. 8 in schematischer Darstellung die erfindungsgemäße Leuchtenprüfeinrichtung während des Meßvorganges,

Fig. 9 in einer Darstellung entsprechend Fig. 8 ein weiteres Meßverfahren.

Mit der Leuchtenprüfeinrichtung können Rückleuchten von Fahrzeugen auf ihre Funktionstüchtigkeit geprüft werden. Mit der Prüfeinrichtung können die Lichtstärken von Rücklicht, Bremslicht, Blinklicht, Nebelschlußlicht und Rückfahrscheinwerfer gemessen werden.

Die Prüfeinrichtung hat einen Meßkopf 1, der an einem verfahrbaren Gestell 2 vorgesehen ist. Das Gestell 2 hat einen U-förmigen Gestellteil 3, an dessen Unterseite Räder oder Rollen 4 gelagert sind. Das Gestell 2 ist vorteilhaft auf vier Rädern 4 abgestützt, die sich an beiden Enden der parallel zueinander liegenden Schenkel 5 und 6 des Gestellteiles 3 befinden. Vorteilhaft sind die Räder 4 um vertikale Achsen drehbar an den Gestellteilschenkeln 5, 6 gelagert.

Vom freien Ende des Gestellteilschenkels 6 steht senkrecht eine Säule 7 ab, an der der Meßkopf 1 gelagert ist. Der Meßkopf 1 liegt im Bereich oberhalb der Gestellteilschenkel 5, 6, so daß keine Kippgefahr beim Verfahren des Gestelles 2 mit dem Meßkopf 1 besteht. Bei einer einfachen Ausführungsform ist der Meßkopf 1 an der Säule 7 starr befestigt. Der Bodenabstand des Meßkopfes 1 entspricht in diesem Falle dem üblichen Bodenabstand der zu vermessenden Rückleuchten.

Es ist selbstverständlich möglich, den Meßkopf 1 in Längsrichtung der Säule 7 verstellbar anzuordnen. Vorteilhaft ist in einem solchen Fall der Meßkopf 1 stufenlos verstellbar, so daß er zum Vermessen der Fahrzeugrückleuchte in jede erforderliche Lage eingestellt werden kann. Es besteht auch die Möglichkeit, für den Meßkopf 1 an der Säule 7 Rastpositionen vorzusehen. Die Lage der Rastpositionen entspricht beispielsweise den Bodenabständen der zu vermessenden Rückleuchten gemäß den wichtigsten Normen beispielsweise in Europa, den U.S.A. oder Japan.

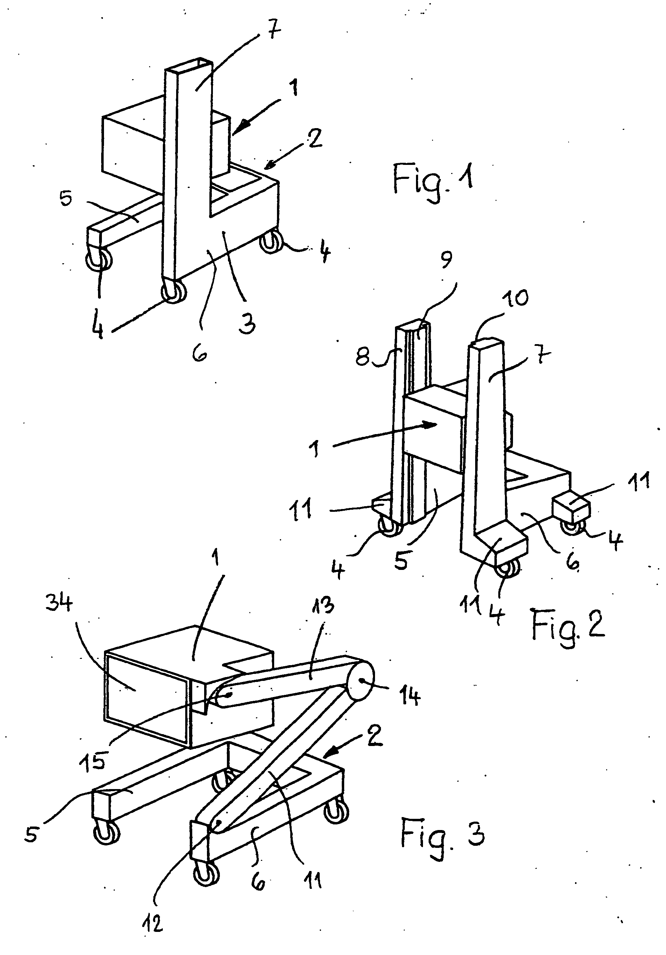

Bei der Ausführungsform gemäß Fig. 2 wird der Meßkopf 1 von zwei Säulen 7, 8 getragen, die von den freien Enden der Gestellteilschenkel 5, 6 senkrecht nach oben abstehen. Wie beim vorigen Ausführungsbeispiel kann der Meßkopf 1 fest zwischen den Säulen 7, 8 montiert sein. Vorteilhaft jedoch ist der Meßkopf 1 zwischen den Säulen 7, 8 vorzugsweise stufenlos in der Höhe verstellbar. Die Säulen 7, 8 sind hierzu an ihren einander zugewandten Seiten mit Führungen 9, 10 versehen, längs derer der Meßkopf 1 verschiebbar ist. Zum Verstellen des Meßkopfes 1 längs der Führungen 9, 10 wird vorteilhaft ein (nicht dargestellter) Antrieb eingesetzt, mit dem der Meßkopf 1 in die gewünschte Höhe verstellt werden kann.

Um eine hohe Standfestigkeit der Leuchtenprüfeinrichtung zu erreichen, sind die Räder bzw. Rollen 4 an seitlichen Auslegern 11 vorgesehen, die an den beiden Enden der Gestellteilschenkel 5, 6 vorgesehen sind.

Fig. 3 zeigt eine Ausführungsform, bei der am freien Ende des Schenkels 6 des U-förmigen Gestelles 2 das eine Ende eines Armes 11 um eine horizontale Achse 12 schwenkbar gelagert ist. Am anderen Ende des Armes 11 ist ein weiterer Arm 13 angelenkt, der an seinem freien Ende den Meßkopf 1 trägt. Die beiden Arme 11, 13 sind um ihre gemeinsame Achse 14, die parallel zur Schwenkachse 12 liegt, gegeneinander verschwenkbar. Der Meßkopf 1 ist um eine horizontale Achse 15 schwenkbar mit dem Arm 13 verbunden. Die beiden Arme 11, 13 können motorisch gegeneinander verschwenkt werden, so daß der Meßkopf 1 in jede gewünschte Höhenlage eingestellt werden kann. Der Stellantrieb für solche nach Art einer Hebebühne ausgebildeten Verstelleinrichtungen 11, 13 ist bekannt und wird darum nicht näher erläutert.

Die beiden Arme 11, 13 liegen in einer vertikalen Ebene übereinander und können so weit gegeneinander geschwenkt werden, daß sie aufeinander liegen. Der Meßkopf 1 befindet sich im Bereich zwischen den beiden Gestellteilschenkeln 5, 6, die einen solchen Abstand voneinander haben, daß der Meßkopf 1 in seiner untersten Lage zwischen die beiden Schenkel 5, 6 gelangen kann. Die Leuchtenprüfeinrichtung weist in dieser Lage nur eine geringe Bauhöhe auf.

Der Arm 11 der Verstelleinrichtung kann an seinem freien Ende auch um zwei Achsen gelenkig mit dem Gestell 2 verbunden sein. Zusätzlich zu der horizontalen Schwenkachse 12 kann noch eine vertikale Schwenkachse vorgesehen sein. Dadurch kann die Verstelleinrichtung 11, 13 relativ zum Gestell 2 auch um diese vertikale Achse geschwenkt werden. Dadurch läßt sich der Meßkopf 1 vielfältig einstellen.

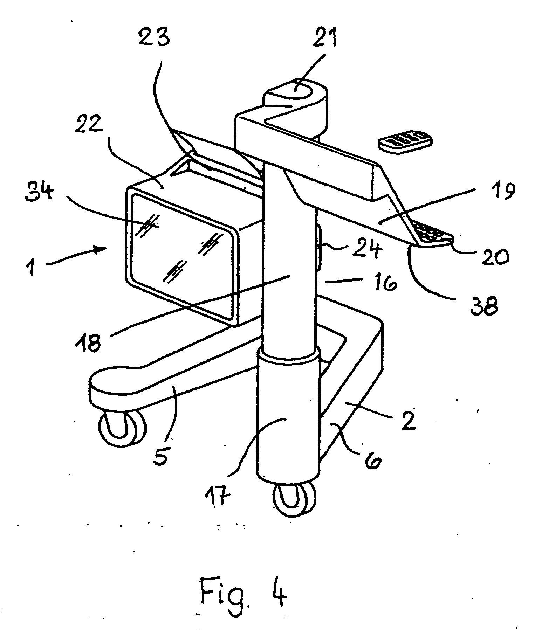

Die Leuchtenprüfeinrichtung nach Fig. 4 hat ein im wesentlichen U-förmiges Gestell 2, dessen beide Schenkel 5, 6 im Unterschied zu den vorigen Ausführungsbeispielen nicht parallel zueinander liegen, sondern in Richtung auf ihre freien Enden konvergierend verlaufen. Am freien Ende des Gestellteilschenkels 6 befindet sich eine höhenverstellbare Teleskopsäule 16, mit der der Meßkopf 1 stufenlos in der Höhe verstellt werden kann. Die Teleskopsäule 16 hat einen fest am freien Ende des Gestellteilschenkels 6 befestigten Säulenteil 17, der den höhenverstellbaren Säulenteil 18 aufnimmt. Am oberen Ende des Säulenteiles 18 sind ein Monitor 19 und eine Tastatur 20 gelagert. Beide Teile 19, 20 liegen vorteilhaft auf einer Trageinheit 38 auf, die um die vertikale Achse 21 des Säulenteiles 18 schwenkbar ist. Mit der Tastatur 20 können in noch zu beschreibender Weise während des Meßvorganges Eingaben gemacht werden, die von einem (nicht dargestellten) Rechner verarbeitet werden. Er ist im Ausführungsbeispiel in einem Gehäuse 22 des Meßkopfes 1 untergebracht. In diesem Gehäuse 22 ist vorteilhaft auch ein Drucker 23 angeordnet, mit dem Protokollausdrucke und dergleichen hergestellt werden können. Es ist selbstverständlich möglich, den Rechner und/oder den Drucker zentral vorzusehen und die Daten über das Netz oder auch drahtlos von der Tastatur 20 aus zu übertragen.

Der Säulenteil 18 kann in Höhenrichtung motorisch antreibbar sein. Es ist aber auch möglich, die Verstelleinrichtung 16 so auszubilden, daß der Säulenteil 18 von Hand aufwärts geschoben wird und in jeder gewünschten Verstellage automatisch blockiert wird. Um diese manuelle Verstellung zu erleichtern, kann am Säulenteil 18 und/oder am Gehäuse 22 des Meßkopfes 1 ein Griff 24 vorgesehen sein, mit dem sich die Höhenverstellung einfach vornehmen läßt.

Mit der Leuchtenprüfeinrichtung werden bereits bauartgeprüfte und zugelassene Rückleuchten von Fahrzeugen auf ihre Funktionsfähigkeit geprüft. Diese Prüfung umfaßt alle wesentlichen aktiven Komponenten einer Fahrzeugrückleuchte. Die Prüfung stellt fest, ob die Rückleuchte den gesetzlichen Vorschriften hinsichtlich der Lichtstärke ihrer Komponenten in bestimmten Richtungen, z.B. in HO-VO-Richtung, genügt. Mit der Leuchtenprüfeinrichtung wird die Lichtstärke der Komponenten der Rückleuchte geprüft.

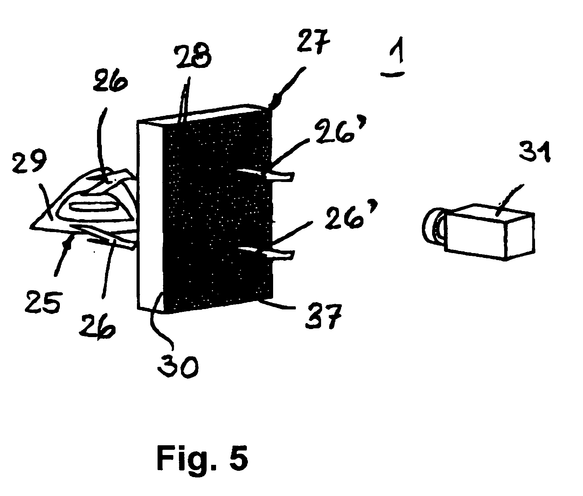

Fig. 5 zeigt den grundsätzlichen Meßaufbau. Die zu vermessende Rückleuchte ist mit 25 bezeichnet. Die von ihr ausgesandten, durch Pfeile gekennzeichneten Strahlen 26 fallen auf den Meßkopf 1, der im Ausführungsbeispiel ein Plattenpaket 27 aus mehreren Lochblechen aufweist. Das Plattenpaket 27 bildet eine mattschwarze Strahlenselektionseinheit. Die Öffnungen 28 in den Lochblechen des Plattenpaketes 27 lassen die von der Rückleuchte 25 ausgesandten Strahlen 26 durch. Wie Fig. 5 zeigt, treten die Strahlen 26 in unterschiedlichen Richtungen aus dem Lichtfenster 29 der Rückleuchte 25 aus. Im Plattenpaket 27 werden die Strahlen 26 in noch zu beschreibender Weise so selektiert, daß sie auf der Austrittsseite 30 des Plattenpaketes 27 gerichtet austreten. Im dargestellten Ausführungsbeispiel treten die Strahlen 26' in Horizontalrichtung aus. Die Austrittsseite 30 des Plattenpaketes 27 wird über eine Mattscheibe 34 von einer Kamera 31 erfaßt. Sie ist vorteilhaft eine Digitalkamera, die an den Rechner angeschlossen ist. Die aus der Austrittsseite 30 austretenden Strahlen 26' bilden ein Abbild der örtlichen Verteilung der Leuchtdichte der zu messenden Funktionsteile der Rückleuchte 25 in der gemessenen Richtung. Dieses Abbild wird von der Kamera 31 erfaßt und kann vom angeschlossenen Rechner weiterverarbeitet werden. Mit der Kamera 31 läßt sich die örtliche Verteilung der Leuchtdichte in der gemessenen Richtung genau erfassen, wobei für die Messung eine relativ grobe Positionierung der Leuchtenprüfeinrichtung ausreicht. Nach der Verarbeitung der Daten im Rechner kann über den Drucker 23 ein Meßprotokoll ausgedruckt werden. Je nach verwendeter Software können die Meßergebnisse in Diagrammform und dergleichen ausgedruckt werden, so daß das Meßergebnis für den jeweiligen Einsatzfall optimal aufbereitet werden kann. Zusätzlich oder anstelle eines Ausdruckes können die Meßergebnisse auch auf dem Monitor 19 dargestellt werden, der beispielsweise ein Flachbildschirm sein kann. Die von der Kamera 31 gelieferten Meßergebnisse können beispielsweise mit in einem Datenspeicher abgelegten Meßdaten verglichen werden. So können Abweichungen zwischen den durch die jeweilige Norm vorgegebenen Meßdaten und den gemessenen Istdaten einfach erkannt und zur Anzeige gebracht werden, beispielsweise auf dem Flachbildschirm oder auf dem auszudruckenden Meßprotokoll.

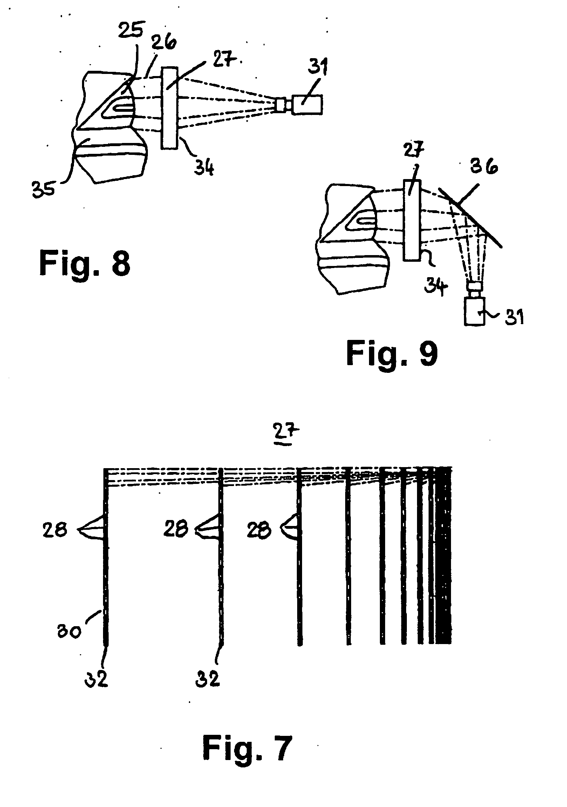

Anhand von Fig. 7 wird der Aufbau des Plattenpaketes 27 näher beschrieben. Es besteht aus einzelnen, parallel zueinander liegenden Platten 32, die jeweils als Lochbleche ausgebildet sind. Die Platten 32 sind gleich ausgebildet, jedoch in unterschiedlichen Abständen zueinander angeordnet. Die Abstände zwischen den Platten 32 sind so gewählt, daß nur Licht durch direkt voreinander liegende Öffnungen 28 der Platten 32 gelangen kann. Dadurch wird verhindert, daß beispielsweise ein schräg auf das Plattenpaket 27 fallender Strahl 26 ungehindert bis zur Austrittsseite 30 gelangt.

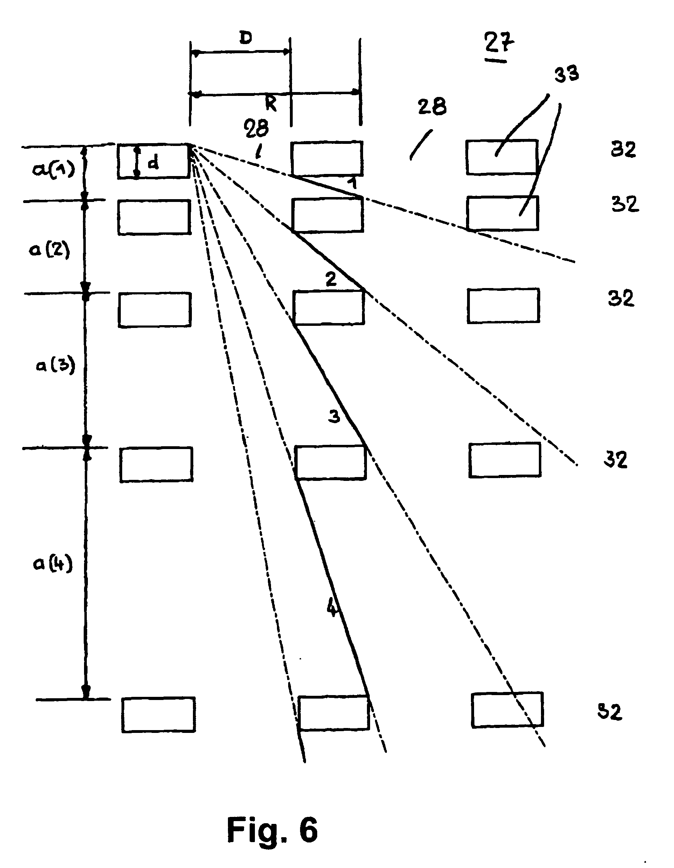

In Fig. 6 ist schematisch das Wirkprinzip des Plattenpaketes 27 dargestellt. Die Platten 32 haben eine Dicke d und die kreisförmigen Öffnungen 28, deren Durchmesser mit D angegeben ist. Der Lochmittenabstand der Öffnungen 28 in jeder Platte 32 ist mit R angegeben. Die Platten 32 haben unterschiedlichen Abstand $a(1)$, $a(2)$, $a(3)$, $a(4)$ ... voneinander. Der Abstand der Platten 32 voneinander nimmt von der Lichteintrittsseite in Richtung auf die Austrittsseite 30 zu. Die Abstände der Platten 32 voneinander beträgt somit $a(i)$, wobei $i = 1, 2, ...$ ist. Der maximale Abstand zwischen den Platten 32 bestimmt sich somit nach der Formel

$$a(i + 1) = a(i) \times R/D.$$

Hierbei ist $a(0) = d$. Dabei bedeuten:

d    Blechdicke

R    Lochmittenabstand, Rastermaß

D    Lochdurchmesser

Die Formel gilt für kreisförmige Öffnungen und für eine hexagonale (wabenartige) Lochanordnung. Für andere Öffnungsanordnungen ist anstelle des Lochmittenabstandes R der minimale Lochmittenabstand anzusetzen.

Aufgrund der obigen Formel kann sehr einfach eine minimale Anzahl von Platten 32 bei maximalem Abstand der Platten 32 erzielt werden. Auf diese Weise kann bei einer vorgegebenen Dicke des Plattenpaketes 27 und einer vorgegebenen Zahl von Platten 32 die minimale Zahl der Platten bestimmt werden.

In Fig. 6 sind beispielhaft vier Strahlen 1 bis 4 eingezeichnet, die durch das Plattenpaket 27 hindurchtreten. Es ist erkennbar, daß schräg in die Öffnungen 28 einfallende Strahlen nicht ungehindert bis zur Austrittsseite 30 gelangen, sondern an den zwischen den Öffnungen 28 befindlichen Stegen 33 abgefangen werden.

Hinter dem Plattenpaket 27 an der Austrittsseite 30 ist eine Mattscheibe 34 (Fig. 3 und 4) vorgesehen, welche die Leuchtfläche der Rückleuchte abbildet. Die Kamera 31 erfaßt dieses Abbild auf der Mattscheibe 34. Das Plattenpaket 27 ist im Gehäuse 22 geschützt untergebracht. An der Lichteintrittsseite des Gehäuses 22 kann eine lichtdurchlässige, die Richtung der Strahlen beim Durchtritt nicht verändernde Scheibe vorgesehen sein.

Bei einem Ausführungsbeispiel beträgt der Öffnungsdurchmesser D 3 mm, der Lochmittenabstand R 5 mm und die Dicke d der Platte 32 1 mm. Die Platten 32 können eine Größe beispielsweise von 320 auf 420 mm haben, wobei das Meßfeld beispielsweise 300 zu 400 mm beträgt. Diese Angaben stellen lediglich Beispiele dar und beschränken die Ausbildung des Meßkopfes 1 nicht auf solche Abmessungen. Grundsätzlich können die Platten 32 jede geeignete Größe haben, und zwar unabhängig vom gewünschten Aufnahmebereich und der Größe des Meßkopfes 1.

Der Flächenquerschnitt der Platten 32 ist vorteilhaft so groß, daß das gesamte, von der zu vermessenden Leuchte 25 abgestrahlte Licht erfaßt wird. Sind größere Leuchten zu vermessen, kann es vorteilhaft sein, nicht die Querschnittsfläche des Plattenpaketes 27 zu vergrößern, sondern mit dem Meßkopf 1 nacheinander die Abstrahlbereiche der Rückleuchte 25 zu vermessen. Rechnerseitig ist es bei entsprechender Software ohne weiteres möglich, die verschiedenen Meßbereiche so zu verarbeiten, daß als Meßergebnis ein einheitlicher Meßbereich angezeigt wird.

Fig. 8 zeigt eine Meßanordnung bei Vermessung der Rückleuchte 25 eines Kraftfahrzeuges 35. Die aus der Rückleuchte 25 nach hinten austretenden Strahlen 26 gelangen in das Plattenpaket 27 des Meßkopfes 1. Hier gelangen die Strahlen 26 in der beschriebenen Weise durch die Öffnungen 28 der Platten 32 und gelangen auf die ausgangsseitige Mattscheibe 34. Auf ihr bildet sich die Leuchtfläche der zu vermessenden Rückleuchte 25 ab. Dieses Abbild wird von der Kamera 31 erfaßt, die senkrecht auf die Mattscheibe 34 gerichtet ist.

Es ist auch möglich, die Kamera 31 so anzuordnen (Fig. 9), daß ihr Sichtfeld nicht parallel zur Mattscheibe 34 des Plattenpaketes 27 liegt. Um dennoch das Abbild auf der Mattscheibe 34 zu erfassen, ist ein Umlenkspiegel 36 vorgesehen, auf den die Kamera 31 gerichtet ist. Der Umlenkspiegel 36 ist im Gehäuse 22 des Meßkopfes 1 untergebracht. Es ist auch möglich, den Umlenkspiegel 36 an der Außenseite des Meßkopfgehäuses 22 anzulenken, so daß er bei Bedarf weggeschwenkt werden kann und die Kamera 31 während des Meßvorganges eine Position relativ zum Plattenpaket 27 entsprechend Fig. 8 einnehmen kann.

Das Verhältnis X von Lochdurchmesser D zur Dicke des Plattenpaketes 27 liegt beispielhaft im Bereich von etwa 1:10 bis etwa 1:40, vorzugsweise im Bereich von etwa 1:20 bis etwa 1:30. Das angegebene Verhältnis X ist einerseits möglichst groß zu wählen, damit die Mattscheibe 34 eine maximale Helligkeit hat und die Belichtungszeit der Kamera 31 klein gehalten werden kann. Andererseits sollte der diesem Verhältnis X entsprechende Blickwinkel durch die Strahlenselektionseinheit arctan (X) deutlich kleiner sein als die sogenannte Keulenbreite der schärfstgebündelten zu messenden Leuchtenfunktion, z.B. der Nebenschlußleuchte. Das Meßergebnis kann dann mit hoher Genauigkeit der Lichtstärke in der gemessenen Richtung zugeordnet werden.

Bei der Messung muß der Meßkopf 1 nicht in einem genauen Abstand zur zu vermessenden Leuchte 25 angeordnet werden. Die mit dem Quadrat der Entfernung abnehmende Helligkeit der Leuchte 25 wird dadurch kompensiert, daß die Kamera 31 durch jede Öffnung 28 des Plattenpaketes 27 eine mit dem Quadrat der Entfernung zunehmende Fläche der Leuchte 25 sieht und erfaßt. Auf diese Weise wird eine Selbstkompensierung erreicht, so daß ein genau einzuhaltender Abstand zwischen dem Meßkopf 1 und der Leuchte 25 nicht erforderlich ist.

Bei der Messung wird im dargestellten und beschriebenen Ausführungsbeispiel vorzugsweise die Lichtstärke in HO-VO-Richtung gemessen. Soll die Leuchtenprüfeinrichtung in horizontaler Richtung relativ zum Fahrzeug eingestellt werden, wird die Einrichtung beispielsweise mit Rollen auf Schienen verfahren, die vor bzw. hinter dem Fahrzeug quer zu dessen Längsrichtung verlaufen. Ist die Kamera 31 eine Schwarz-Weiß-Kamera, wird mit Farbfiltern die (genormte) spektrale Empfindlichkeitskurve des menschlichen Auges nachgebildet. Es kann aber auch eine Farbkamera eingesetzt werden, beispielsweise eine RGB-CCD-Kamera, wenn auch die Farborte bstimmt werden sollen. Die spektralen Empfindlichkeitskurven der drei RGB-Kanäle dieser Kamera werden durch Farbfilter den CIE-genormten Kurven angepaßt, so daß die Spektralempfindlichkeitskurven der RGB-Kanäle der Kamera 31 den spektralen Empfindlichkeitskurve der drei Augensensorarten entsprechen. Es ist dann möglich, mit einer solchen Farbkamera 31 eine Farbortmessung zu ermöglichen. Die Farbe wird bei einem CIE-Farbdreieck mit zwei Zahlen beschrieben, die Koordinaten x und y des sogenannten Farbortes im CIE-Dreieck. Der Gesetzgeber schreibt die Farborte vor, die zum Beispiel bei Blinkleuchten mit der Farbe "Gelb/Orange" und beispielsweise bei Brems- und Schlußleuchten mit der Farbe "Rot" einer bestimmten Wellenlänge entsprechen.

Die Richtwirkung des Plattenpaketes 27 ergibt sich aus dem Verhältnis X von Lochdurchmesser D zur Dicke des Plattenpaketes 27. Bei einem Verhältnis von beispielsweise 4 mm zu 100 mm, d.h. 1:25, ergibt sich ein Öffnungswinkel von +/- arctan (0,02) = +/- 1,15°. Dieser Öffnungswinkel ist auf jeden Fall wesentlich kleiner als die Keulenbreite der gemessenen Rückleuchtenfunktion zu wählen. Dadurch ist sichergestellt, daß das Meßergebnis mit hoher Genauigkeit der zu bestimmenden Lichtstärke in HO-HV-Richtung zugeordnet werden kann.

Mit der Leuchtenprüfeinrichtung können nicht nur Rückleuchten, sondern auch Scheinwerfer von Fahrzeugen vermessen werden.

Der Meßkopf 1 ist so an der Leuchtenprüfeinrichtung vorgesehen, daß er nicht nur in der Höhe auf die zu vermessende Leuchte 25 eingestellt werden kann, sondern auch in eine exakte horizontale Lage.

**Patentansprüche**

1. Leuchtenprüfeinrichtung für Fahrzeuge, vorzugsweise für Kraftfahrzeuge, mit wenigstens einem Messkopf (1), zur Erfassung der von der zu prüfenden Leuchte (25) ausgesandten Strahlen (26), wobei der Messkopf (1) eine Strahlenselektionseinheit (27, 37) aufweist, die für die Strahlen (26) Durchtrittsöffnungen (28) aufweist, hinter denen sich wenigstens eine Strahlenerfassungseinheit (31) befindet, wobei die Strahlenselektionseinheit (27) aus mit Abstand hintereinander angeordneten Lochplatten (32) besteht, wobei alle Durchtrittsöffnungen (28) gleich groß und alle Lochplatten (32) gleich ausgebildet sind, wobei alle Durchtrittsöffnungen (28) in allen Lochplatten (32) den gleichen Lochmittenabstand R voneinander haben und entweder alle kreisförmig oder alle hexagonal sind,
**dadurch gekennzeichnet, dass** der Abstand der Lochplatten (32) voneinander der Beziehung a(i + 1) = a(i) · R/D entspricht, wobei i = 0,1,2..., D der Durchmesser der Durchtrittsöffnungen (28) und a(0) die Dicke der Lochplatte (32) ist.

2. Einrichtung nach Anspruch 1,
**dadurch gekennzeichnet, dass** das Verhältnis (X) von Durchmesser (D) der Durchtrittsöffnung (28) zur Dicke der Strahlenselektionseinheit (27, 37) im Bereich zwischen etwa 1:10 und etwa 1:40, vorteilhaft zwischen etwa 1:20 und etwa 1:30 liegt.

3. Einrichtung nach Anspruch 1 oder 2,
**dadurch gekennzeichnet, dass** der Messkopf (1) am Austrittsende der Strahlen (26) eine Mattscheibe (34) aufweist.

4. Einrichtung nach einem der Ansprüche 1 bis 3,
**dadurch gekennzeichnet, dass** die Strahlenerfassungseinheit (31) eine Kamera, vorteilhaft eine CCD-Kamera und/oder eine RGB-Kamera ist.

5. Einrichtung nach einem der Ansprüche 1 bis 4,
**dadurch gekennzeichnet, dass** der Messkopf (1) an einem Gestell (2) gehalten, vorzugsweise verstellbar gehalten ist.

6. Einrichtung nach einem der Ansprüche 1 bis 5,
**dadurch gekennzeichnet, dass** die Strahlerfassungseinheit (31) an einen Rechner angeschlossen ist.

**Claims**

1. Testing device for vehicle lights, in particular for motor vehicles with at least one measuring head (1) for the coverage of the rays (26) emitted from the light (25) to be tested, the measuring head (1) comprising a ray selection unit (27, 37), having passage openings (28) for the rays (26), behind which is situated at least one ray coverage unit (31), the ray selection unit (27) consisting of perforated plates (32) arranged one behind the other, all passage openings (28) being equally sized and all perforated plates (32) being equally shaped, all passage openings (28) in all perforated plates (32) having the same hole centre distance R from another and all being either circular or hexagonal,
**characterised in that** the distance of the perforated plates (32) from one another corresponds to the relation a(i + 1) = a(i) x R/D, where i = 0, 1, 2 ... D the diameter of the passage openings (28) and a(0) the thickness of the perforated plate (32).

**2.** Device according to claim 1,
**characterised in that** the relation (X) of the diameter (D) of the passage opening (28) to the thickness of the ray selection unit (27, 37) is situated in the range between approximately 1:10 and approximately 1:40, advantageously between approximately 1:20 and approximately 1:30.

**3.** Device according to claim 1 or 2,
**characterised in that** the measuring head (1) comprises at the outlet end of the rays (26) a focussing screen (34).

**4.** Device according to one of the claims 1 to 3,
**characterised in that** the ray coverage unit (31) is a camera, advantageously a CCD-camera and/or a RGB-camera.

**5.** Device according to one of the claims 1 to 4,
**characterised in that** the measuring head (1) is fixed, preferably adjustably supported at a frame (2).

**6.** Device according to one of the claims 1 to 5,
**characterised in that** the ray coverage unit (31) is connected to a computer.

**Revendications**

**1.** Dispositif de test de feux pour véhicules, en particulier pour véhicules automobiles avec au moins une tête de mesure (1) pour la couverture des rayons (26), émis du feu à tester (25), la tête de mesure (1) comprenant une unité sélectrice des rayons (27, 37) présentant des ouvertures de transit (28) pour les rayons (26), derrière lesquelles se trouve au moins une unité de couverture des rayons (31), l'unité sélectrice des rayons (27) se composant de panneaux à trous (32), placés à distance l'un de l'autre, toutes les ouvertures de transit (28) étant de même grandeur et tous les panneaux à trous (32) étant configurés de même façon, toutes les ouvertures de transit (28) dans tous les panneaux à trous (32) ayant le même écartement des centres de trous R l'une de l'autre et tous étant circulaires ou hexagonaux,
**caractérisé en ce que** la distance des panneaux à trous (32) l'un de l'autre corresponde à la relation a(i+1) = a(i) · R/D, i étant 0, 1, 2 ... D le diamètre des ouvertures de transit (28) et a(0) l'épaisseur du panneau à trous (32).

**2.** Dispositif selon revendication 1,
**caractérisé en ce que** la relation (X) du diamètre (D) de l' ouverture de transit (28) par rapport à l'épaisseur de l'unité sélectrice des rayons (27, 37) se trouve dans la marge entre environ 1:10 et environ 1:40, avantageusement entre environ 1:20 et environ 1:30.

**3.** Dispositif selon revendication 1 ou 2,
**caractérisé en ce que** la tête de mesure (1) comprend à son extrémité de sortie des rayons (26) un verre dépoli (34).

**4.** Dispositif selon une des revendications 1 à 3,
**caractérisé en ce que** l'unité de couverture des rayons (31) est une caméra, avantageusement une caméra CCD et/ou une caméra RVB.

**5.** Dispositif selon une des revendications 1 à 4,
**caractérisé en ce que** la tête de mesure (1) est fixée dans un support (2), et ceci de préférence de façon ajustable.

**6.** Dispositif selon une des revendications 1 à 5,
**caractérisé en ce que** l'unité de couverture des rayons (31) est branchée à un ordinateur.

Fig. 1

Fig. 2

Fig. 3

Fig. 4

**Fig. 5**

**Fig. 6**

Fig. 8

Fig. 9

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5392111 A
- US 4498767 A
- SU 996897 A